(19) **Europäisches Patentamt / European Patent Office / Office européen des brevets**

(11) **EP 4 723 211 A1**

(12) **EUROPEAN PATENT APPLICATION**
published in accordance with Art. 153(4) EPC

(43) Date of publication:
08.04.2026 Bulletin 2026/15

(21) Application number: 24811224.5

(22) Date of filing: 07.02.2024

(51) International Patent Classification (IPC):
$H01M\ 4/36^{(2006.01)}$     $H01M\ 4/505^{(2010.01)}$
$H01M\ 4/525^{(2010.01)}$     $C01G\ 53/00^{(2025.01)}$
$H01M\ 4/131^{(2010.01)}$     $H01M\ 10/052^{(2010.01)}$
$H01M\ 4/02^{(2006.01)}$

(52) Cooperative Patent Classification (CPC):
Y02E 60/10

(86) International application number:
PCT/KR2024/001830

(87) International publication number:
WO 2024/242285 (28.11.2024 Gazette 2024/48)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 25.05.2023 KR 20230067743

(71) Applicants:
• POSCO Holdings Inc.
Pohang-si, Gyeongsangbuk-do 37859 (KR)

• Research Institute of Industrial Science & Technology
Pohang-si, Gyeongsangbuk-do 37673 (KR)

(72) Inventors:
• NAM, Sang Cheol
Seoul 02587 (KR)
• YU, Byongyong
Incheon 22003 (KR)
• CHANG, Joon Ha
Incheon 21982 (KR)

(74) Representative: Pfenning, Meinig & Partner mbB
Patent- und Rechtsanwälte
Theresienhöhe 11a
80339 München (DE)

(54) **CATHOD ACTIVE MATERIAL FOR LITHIUM SECONDARY BATTERY AND MANUFACTURING METHOD THEREFOR**

(57) According to the present embodiment, a positive electrode active material for a lithium secondary battery may comprise: a lithium manganese-rich first positive electrode active material represented by Chemical Formula 1 below; and a high-nickel single-particle second positive electrode active material represented by Chemical Formula 2 below, and an average particle size ($D50_1$) of the lithium manganese-rich first positive electrode active material may be greater than an average particle size ($D50_2$) of the high-nickel single-particle second positive electrode active material.

[Chemical Formula 1]     $Li_{1+x1}(Ni_{(1-a1-b1)}Co_{a1}Mn_{b1})O_2$

(where $-0.5 \le x_1 \le 0.5$, $0 \le a_1 \le 0.5$, and $0.5 \le b_1 \le 1$.)

[Chemical Formula 2]     $Li_{1+x2}(Ni_{(1-a2-b2-c2)}Co_{a2}Mn_{b2}M_{c2})O_2$

(where $-0.5 \le x_2 \le 0.5$, $0 \le a_2 \le 0.2$, $0 \le b_2 \le 0.1$, $0 \le c_2 \le 0.03$, and M is at least one element selected from Fe, Cr, Ti, Zn, V, Al, Mg, and Zr.)

**(Cont. next page)**

EP 4 723 211 A1

【Fig. 1】

## Description

[Technical Field]

The present embodiments relate to a positive electrode active material for a lithium secondary battery and a method of manufacturing the same, and more particularly, to a positive electrode active material for a lithium secondary battery including a manganese-rich positive electrode active material and a high-nickel positive electrode active material, and a method of manufacturing the same.

[Background Art]

Layered NCM-based positive electrode active materials exhibit a characteristic in which the capacity increases linearly as the Ni content increases, and thus are known to be suitable materials for improving driving range in electric vehicles due to their higher energy density. However, due to instability in nickel supply, the price of Ni has fluctuated significantly year-over-year, resulting in considerable variation in the production cost of the positive electrode active material itself.

In contrast, manganese is relatively inexpensive, and when the Mn content is increased relative to Ni in a layered positive electrode material, a composite of $Li_2MnO_3$ and $LiNi(Co,Mn,Al)O_2$ is formed inside the particle. When charged at a high voltage of 4.5 V or higher during an initial formation, both cation redox in the $LiNiO_2$ phase and oxygen redox in the $Li_2MnO_3$ phase occur simultaneously, enabling the realization of a high capacity of 250 mAh/g or greater.

However, such Mn-rich positive electrode active materials exhibit structural instability during charge and discharge cycling, which leads to voltage decay. Additionally, continuous anion redox causes ongoing oxygen evolution. Despite extensive research efforts, these issues have prevented Mn-rich materials from being commercialized.

The present invention is directed to solving the above-described problems. The core concept of the invention is to provide a bimodal structure formed by mixing a manganese-rich (Mn-rich) layered positive electrode active material having larger particle size with a high-nickel NCM layered single-crystal positive electrode active material at a defined ratio. By combining the advantages of Mn-rich active materials (dual redox capability through both cation and anion redox) with the advantages of single-crystal high-nickel particles (reduced gas generation and improved cycle life), the performance can be significantly improved compared with conventional bimodal mixtures of large and small Mn-rich particles.

[Detailed description]

[Technical Problem]

The present invention aims to provide a positive electrode active material with enhanced performance that overcomes the primary barrier to commercialization of Mn-rich positive electrode active materials-namely, excessive gas generation and voltage decay caused by continuous anion redox during charge and discharge cycling.

In addition, the present invention aims to provide a novel positive electrode active material and a method of manufacturing the same, which exhibit improved safety compared with high-nickel positive electrode active materials composed of large and small particle sizes, while reducing raw material cost by at least 10%.

[Technical Solution]

According to an embodiment of the present disclosure, a positive electrode active material for a lithium secondary battery may comprise a lithium manganese-rich first positive electrode active material represented by Chemical Formula 1 below, and a high-nickel single-particle second positive electrode active material represented by Chemical Formula 2 below, wherein an average particle size ($D50_1$) of the lithium manganese-rich first positive electrode active material is greater than an average particle size ($D50_2$) of the high-nickel single-particle second positive electrode active material.

[Chemical Formula 1]          $Li_{1+x1}(Ni_{(1-a1-b1)}Co_{a1}Mn_{b1})O_2$

(where $-0.5 \leq x_1 \leq 0.5$, $0 \leq a_1 \leq 0.5$, and $0.5 \leq b_1 \leq 1$.)

[Chemical Formula 2]          $Li_{1+x2}(Ni_{(1-a2-b2-c2)}Co_{a2}Mn_{b2}M_{c2})O_2$

(where $-0.5 \leq x_2 \leq 0.5$, $0 \leq a_2 \leq 0.2$, $0 \leq b_2 \leq 0.1$, $0 \leq c_2 \leq 0.03$, and M is at least one element selected from Fe, Cr, Ti, Zn, V, Al, Mg, and Zr.)

A ratio $D50_1/D50_2$ of the average particle size ($D50_1$) of the lithium manganese-rich first positive electrode active material to the average particle size (D50$_2$) of the high-nickel single-particle second positive electrode active material may be from 2.5 to 4.5.

The average particle size (D50$_1$) of the lithium manganese-rich first positive electrode active material may be from 7 $\mu$m to 15 $\mu$m, and the average particle size (D50$_2$) of the high-nickel single-particle second positive electrode active material may be from 3 $\mu$m to 6 $\mu$m.

The lithium manganese-rich first positive electrode active material may be a secondary particle composed of a plurality of primary particles.

A weight ratio ($w_1/w_2$) of the lithium manganese-rich first positive electrode active material ($w_1$) to the high-nickel single-particle second positive electrode active material ($w_2$) may be from 85:15 to 55:45.

A ratio ($C_{Mn1}/C_{Mn2}$) of a manganese molar content ($C_{Mn1}$), based on total metals excluding lithium, in the lithium manganese-rich first positive electrode active material to a manganese molar content ($C_{Mn2}$), based on total metals excluding lithium, in the high-nickel single-particle second positive electrode active material may be from 15.0 to 70.0.

A difference ($C_{Mn1} - C_{Mn2}$) between the manganese molar content ($C_{Mn1}$), based on total metals excluding lithium, in the lithium manganese-rich first positive electrode active material and the manganese molar content ($C_{Mn2}$), based on total metals excluding lithium, in the high-nickel single-particle second positive electrode active material may be from 50 mol% to 70 mol%.

A ratio ($C_{Ni2}/C_{Ni1}$) of a nickel molar content ($C_{Ni2}$), based on total metals excluding lithium, in the high-nickel single-particle second positive electrode active material to a nickel molar content ($C_{Ni1}$), based on total metals excluding lithium, in the lithium manganese-rich first positive electrode active material may be from 2.0 to 3.0.

A difference ($C_{Ni2} - C_{Ni1}$) between the nickel molar content ($C_{Ni2}$), based on total metals excluding lithium, in the high-nickel single-particle second positive electrode active material and the nickel molar content ($C_{Ni1}$), based on total metals excluding lithium, in the lithium manganese-rich first positive electrode active material may be from 45 mol% to 65 mol%.

The lithium manganese-rich first positive electrode active material may have undergone formation at a voltage of 4.6 V to 4.8 V.

The tap density (m) of the positive electrode active material may be from 1.90 g/cm$^3$ to 2.20 g/cm$^3$, and the specific surface area (B) may be from 2.0 m$^2$/g to 3.0 m$^2$/g.

Further, the positive electrode active material may satisfy Relationship 1 below.

$$[\text{Relationship 1}]$$

$$0.77 \leq (\text{m/B}) \times 10^4 \leq 0.95$$

(where m is the tap density (g/cm$^3$) and B is the specific surface area (m$^2$/g))

In the second positive electrode active material, a nickel molar content, based on total metals excluding lithium, may be 80 mol% or greater, and in the first positive electrode active material, a manganese molar content, based on total metals excluding lithium, may be 50 mol% or greater.

According to another embodiment of the present disclosure, a method for manufacturing a positive electrode active material for a lithium secondary battery may comprise: preparing a lithium manganese-rich first positive electrode active material represented by Chemical Formula 1 below; preparing a high-nickel single-particle second positive electrode active material represented by Chemical Formula 2 below; and mixing the first positive electrode active material and the second positive electrode active material to produce a positive electrode active material.

$$[\text{Chemical Formula 1}] \qquad \text{Li}_{1+x1}(\text{Ni}_{(1-a1-b1)}\text{Co}_{a1}\text{Mn}_{b1})\text{O}_2$$

(where $-0.5 \leq x_1 \leq 0.5$, $0 \leq a_1 \leq 0.5$, and $0.5 \leq b_1 \leq 1$.)

$$[\text{Chemical Formula 2}] \qquad \text{Li}_{1+x2}(\text{Ni}_{(1-a2-b2-c2)}\text{Co}_{a2}\text{Mn}_{b2}\text{M}_{c2})\text{O}_2$$

(where $-0.5 \leq x_2 \leq 0.5$, $0 \leq a_2 \leq 0.2$, $0 \leq b_2 \leq 0.1$, $0 \leq c_2 \leq 0.03$, and M is at least one element selected from Fe, Cr, Ti, Zn, V, Al, Mg, and Zr.)

The average particle size (D50$_1$) of the lithium manganese-rich first positive electrode active material is greater than the average particle size (D50$_2$) of the high-nickel single-particle second positive electrode active material.

The step of preparing the lithium manganese-rich first positive electrode active material may comprise performing formation at a voltage of 4.6 V to 4.8 V.

The formation at 4.6 V to 4.8 V may be performed at a temperature of 40°C to 50°C, and may comprise:

charging the first positive electrode active material at a current rate of 0.1C to a voltage of 4.6 V to 4.8 V; and applying a constant voltage until the current decreases to a 1/20C condition.

In addition, the formation at 4.6 V to 4.8 V may further comprise discharging at a 0.1C current rate.

Preparing the lithium manganese-rich first positive electrode active material may comprise preparing the first positive electrode active material having an average particle size ($D50_1$) in a range of 7 $\mu$m to 15 $\mu$m, and preparing the high-nickel single-particle second positive electrode active material may comprise preparing the second positive electrode active material having an average particle size ($D50_2$) in a range of 3 $\mu$m to 6 $\mu$m.

The step of mixing the first positive electrode active material and the second positive electrode active material to produce the positive electrode active material may comprise mixing at a weight ratio ($w_1/w_2$) of the first positive electrode active material ($w_1$) to the second positive electrode active material ($w_2$) of 85:15 to 55:45.

The mixing step may comprise producing a positive electrode active material satisfying Relationship 1 below.

[Relationship 1]

$$0.77 \leq (m/B) \times 10^4 \leq 0.95$$

(where m is the tap density (g/cm$^3$) of the positive electrode active material, and B is the specific surface area (m$^2$/g))

According to another embodiment of the present disclosure, a positive electrode for a lithium secondary battery may comprise: a current collector; and a positive electrode active material layer disposed on at least one surface of the current collector and comprising the positive electrode active material described above.

A lithium secondary battery according to another embodiment may comprise the above positive electrode.

The lithium secondary battery may exhibit an average voltage decay of 40 mV to 65 mV after 50 charge and discharge cycles.

The lithium secondary battery may satisfy Relationship 2 below.

[Relationship 2]

$$50 \leq \Delta V/(m/B \times 10^4) \leq 80$$

(where $\Delta V$ is a voltage decay after 50 charge/discharge cycles relative to an initial charge/discharge, m is a tap density (g/cm$^3$) of the positive electrode active material, and B is a specific surface area (m$^2$/g) of the positive electrode active material.)

The lithium secondary battery may satisfy Relationship 3 below.

[Relationship 3]

$$3.0 \leq G/(m/B \times 10^4) \leq 5.0$$

(where G is a gas generation amount, m is the tap density (g/cm$^3$) of the positive electrode active material, and B is the specific surface area (m$^2$/g) of the positive electrode active material.)

The lithium secondary battery may satisfy Relationship 4 below.

[Relationship 4]

$$250.0 \leq (G/E_m)/(m/B \times 10^4) \leq 400.0$$

(where G is a gas generation amount of the lithium secondary battery, $E_m$ is a loading amount of the positive electrode active material in the positive electrode, m is the tap density (g/cm$^3$) of the positive electrode active material, and B is the specific surface area (m$^2$/g) of the positive electrode active material.)

[Effects of the Invention]

According to the present invention, the positive electrode active material for a lithium secondary battery provides the advantage of reduced gas generation and reduced voltage decay.

In addition, the method for manufacturing the positive electrode active material for a lithium secondary battery according to the present invention provides the advantage of obtaining a positive electrode active material exhibiting reduced gas generation and reduced voltage decay.

[Brief Description of the Drawings]

FIG. 1 illustrates a cross-sectional SEM image of a positive electrode plate including the positive electrode active material for a lithium secondary battery according to one embodiment of the present invention.

FIG. 2 illustrates results of EDS (Energy-dispersive X-ray spectroscopy) analysis of the positive electrode active material according to Example 1.

FIG. 3 illustrates a cross-sectional SEM image of a positive electrode plate after performing 100 charge and discharge cycles in a coin cell including the positive electrode active material according to Example 1.

FIG. 4 illustrates a cross-sectional SEM image of a positive electrode plate after performing 100 charge and discharge cycles in a coin cell including the positive electrode active material according to Comparative Example 1.

[Mode for Carrying Out the Invention]

In the description of the present invention, terms such as "first," "second," and "third" are used to describe various parts, components, regions, layers, and/or sections, but are not limited thereto. These terms are merely used to distinguish one part, component, region, layer, or section from another. Therefore, a first part, component, region, layer, or section described below may be referred to as a second part, component, region, layer, or section within the scope of the present invention.

Technical and scientific terms used herein refer to specific embodiments only and are not intended to limit the present invention. Singular forms used herein include plural forms unless the context clearly indicates otherwise. As used in the specification, the term "comprise/include/contain" specifies the presence of stated features, regions, integers, steps, operations, elements, and/or components, but does not preclude the presence or addition of one or more other features, regions, integers, steps, operations, elements, and/or components.

Unless otherwise defined, all terms used herein, including technical and scientific terms, have meanings commonly understood by those skilled in the art to which the present invention pertains. Terms defined in commonly used dictionaries shall be interpreted as having meanings consistent with their usage in the relevant technical literature and with the disclosure herein, and shall not be interpreted in an idealized or overly formalistic manner unless explicitly defined otherwise.

Hereinafter, embodiments of the present invention will be described in detail. However, these embodiments are provided by way of example only, and the present invention is not limited thereto. The scope of the present invention is defined only by the appended claims.

**<Positive Electrode Active Material for a Lithium Secondary Battery>**

According to an embodiment of the present invention, a positive electrode active material for a lithium secondary battery may comprise a lithium manganese-rich first positive electrode active material and a high-nickel single-particle second positive electrode active material.

The lithium manganese-rich first positive electrode active material may be a manganese-rich positive electrode active material, and the high-nickel single-particle second positive electrode active material may be a high-nickel positive electrode active material.

A ratio $D50_1/D50_2$, defined as a ratio of an average particle size ($D50_1$) of the lithium manganese-rich first positive electrode active material to an average particle size ($D50_2$) of the high-nickel single-particle second positive electrode active material, may be in a range of 1 to 10, specifically 1.5 to 5.0, and more specifically 2 to 4.

Meanwhile, the lithium manganese-rich first positive electrode active material may be a secondary particle composed of a plurality of primary particles, and may be represented by Chemical Formula 1 below.

[Chemical Formula 1]  $Li_{1+x1}(Ni_{(1-a1-b1)}Co_{a1}Mn_{b1})O_2$

(where $-0.5 \leq x_1 \leq 0.5$, $0 \leq a_1 \leq 0.5$, and $0.5 \leq b_1 \leq 1$.)

The high-nickel single-particle second positive electrode active material may be represented by Chemical Formula 2 below.

[Chemical Formula 2] $\quad Li_{1+x2}(Ni_{(1-a2-b2-c2)}Co_{a2}Mn_{b2}M_{c2})O_2$

(where $-0.5 \leq x_2 \leq 0.5$, $0 \leq a_2 \leq 0.2$, $0 \leq b_2 \leq 0.1$, $0 \leq c_2 \leq 0.03$, and M is at least one element selected from Fe, Cr, Ti, Zn, V, Al, Mg, and Zr.)

The lithium manganese-rich first positive electrode active material may be a manganese-rich active material, and a manganese molar content ($C\_Mn1$), based on total metals excluding lithium, may be 55 mol% or greater.

The average particle size ($D50_1$) of the secondary particle may be in a range of 7 μm to 15 μm, specifically 8 μm to 14 μm.

The high-nickel single-particle second positive electrode active material may be a high-nickel active material, and a nickel molar content ($C\_Ni2$), based on total metals excluding lithium, may be 80 mol% or greater, specifically 85 mol% or greater.

The average particle size ($D50_2$) may be in a range of 3 μm to 6 μm, specifically 3 μm to 5 μm.

Meanwhile, the ratio $D50_1/D50_2$ of the average particle size ($D50_1$) of the lithium manganese-rich first positive electrode active material to the average particle size ($D50_2$) of the high-nickel single-particle second positive electrode active material may be in a range of 1.0 to 5.0, specifically 1.5 to 4.5, and more specifically 2.5 to 4.5.

In the present invention, the "average particle size ($D50$)" of a positive electrode active material may be measured using a particle size analyzer by a general particle size distribution measurement method.

In the present invention, the metal composition and content of the positive electrode active material may be analyzed using ICP-OES (OPTIMA 8300, PerkinElmer).

A ratio ($C_{Mn1}/C_{Mn2}$) of a manganese molar content ($C_{Mn1}$), based on total metals excluding lithium, in the lithium manganese-rich first positive electrode active material to a manganese molar content ($C_{Mn2}$), based on total metals excluding lithium, in the high-nickel single-particle second positive electrode active material may be 15.0 to 70.0, specifically 19.0 to 66.0, and more specifically 19.2 to 65.5.

A difference ($C_{Mn1} - C_{Mn2}$) between the manganese molar content ($C_{Mn1}$), based on total metals excluding lithium, in the first positive electrode active material and the manganese molar content ($C_{Mn2}$), based on total metals excluding lithium, in the second positive electrode active material may be 50 mol% to 70 mol%, specifically 54 mol% to 65 mol%.

A ratio ($C_{Ni2}/C_{Ni1}$) of a nickel molar content ($C_{Ni2}$), based on total metals excluding lithium, in the second positive electrode active material to a nickel molar content ($C_{Ni1}$), based on total metals excluding lithium, in the first positive electrode active material may be 2.0 to 3.0, specifically 2.4 to 2.8.

In addition, a difference ($C_{Ni2} - C_{Ni1}$) between the nickel molar content ($C_{Ni2}$) in the second positive electrode active material and the nickel molar content ($C_{Ni1}$) in the first positive electrode active material may be 45 mol% to 65 mol%, specifically 48 mol% to 60 mol%.

In addition, a weight ratio ($w_1/w_2$), defined as a weight ($w_1$) of the lithium manganese-rich first positive electrode active material to a weight ($w_2$) of the high-nickel single-particle second positive electrode active material, may be 85:15 to 55:45, specifically 80:20 to 60:40.

When the lithium manganese-rich first positive electrode active material and the high-nickel single-particle second positive electrode active material satisfy the above size ranges and ratios, the packing density of the positive electrode active material per unit volume may be improved, thereby increasing the energy density per unit volume.

The lithium manganese-rich first positive electrode active material according to an embodiment of the present invention may have undergone formation at a high voltage, specifically may have undergone formation at 4.6 V to 4.8 V.

By performing high-voltage formation, the manganese-rich lithium manganese-rich first positive electrode active material sufficiently releases oxygen ($O_2$), and a continuous anion redox reaction during repeated charge and discharge cycles may be significantly suppressed, thereby reducing gas generation and voltage decay and allowing high capacity realization.

A tap density of the positive electrode active material for a lithium secondary battery may be 1.90 g/cm$^3$ to 2.20 g/cm$^3$, specifically 1.91 g/cm$^3$ to 2.15 g/cm$^3$.

In the present invention, "tap density" may be measured by loading the positive electrode active material into a graduated cylinder, mounting the cylinder onto a tap density measuring device, performing at least 3000 tapping cycles, and dividing the mass of the positive electrode active material by the measured volume.

When the tap density is within the above range, the positive electrode active material may improve output characteristics and cycle life characteristics of the battery.

The lithium manganese-rich first positive electrode active material and the high-nickel single-particle second positive electrode active material of the present invention may have a specific surface area of 2.0 m$^2$/g to 3.0 m$^2$/g,

specifically 2.1 m$^2$/g to 2.6 m$^2$/g.

In the present invention, the "specific surface area" may be measured by nitrogen adsorption using the Brunauer-Emmett-Teller (BET) method.

When the specific surface area is within the above range, output characteristics and cycle life characteristics of the battery may be enhanced.

Meanwhile, the lithium manganese-rich first positive electrode active material and the high-nickel single-particle second positive electrode active material of an embodiment of the present invention may satisfy Relationship 1 below.

$$[\text{Relationship 1}]$$

$$0.77 \le (m/B) \times 10^4 \le 0.95$$

(where m is the tap density (g/cm$^3$) of the positive electrode active material, and B is the specific surface area (m$^2$/g))

A value of Relationship 1 for the positive electrode active material may be 0.77 to 0.95, specifically 0.82 to 0.95.

When the value of Relationship 1 is within the above range, output characteristics and cycle life characteristics of the battery may be further improved.

**<Method for Manufacturing a Positive Electrode Active Material for a Lithium Secondary Battery>**

According to another embodiment of the present disclosure, a method for manufacturing a positive electrode active material for a lithium secondary battery may comprise: preparing a lithium manganese-rich first positive electrode active material; preparing a high-nickel single-particle second positive electrode active material; and mixing the first positive electrode active material and the second positive electrode active material to produce a positive electrode active material.

The lithium manganese-rich first positive electrode active material may be a manganese-rich active material and may be represented by Chemical Formula 1 below. The high-nickel single-particle second positive electrode active material may be a high-nickel active material and may be represented by Chemical Formula 2 below.

A ratio $D50_1/D50_2$, defined as a ratio of an average particle size ($D50_1$) of the lithium manganese-rich first positive electrode active material to an average particle size ($D50_2$) of the high-nickel single-particle second positive electrode active material, may be in a range of 1.5 to 5.0, specifically 2.5 to 3.5.

The lithium manganese-rich first positive electrode active material may be a secondary particle composed of a plurality of primary particles, and may be represented by:

[Chemical Formula 1]     $Li_{1+x1}(Ni_{(1-a1-b1)}Co_{a1}Mn_{b1})O_2$

(where $-0.5 \le x_1 \le 0.5$, $0 \le a_1 \le 0.5$, and $0.5 \le b_1 \le 1$.)

The high-nickel single-particle second positive electrode active material may be represented by:

[Chemical Formula 2]     $Li_{1+x2}(Ni_{(1-a2-b2-c2)}Co_{a2}Mn_{b2}M_{c2})O_2$

(where $-0.5 \le x_2 \le 0.5$, $0 \le a_2 \le 0.2$, $0 \le b_2 \le 0.1$, $0 \le c_2 \le 0.03$, and M is at least one element selected from Fe, Cr, Ti, Zn, V, Al, Mg, and Zr.)

The lithium manganese-rich first positive electrode active material may be a manganese-rich active material having a manganese molar content ($C_{Mn1}$), based on total metals excluding lithium, of 55 mol% or greater.

The average particle size ($D50_1$) of the first positive electrode active material may be in a range of 7 $\mu$m to 15 $\mu$m, specifically 8 $\mu$m to 14 $\mu$m.

The high-nickel single-particle second positive electrode active material may have a nickel molar content ($C_{Ni2}$), based on total metals excluding lithium, of 80 mol% or greater, specifically 85 mol% or greater. The average particle size ($D50_2$) of the second positive electrode active material may be in a range of 3 $\mu$m to 6 $\mu$m, specifically 3 $\mu$m to 5 $\mu$m.

Since the characteristics of the lithium manganese-rich first positive electrode active material and the high-nickel single-particle second positive electrode active material have been described above in detail, redundant descriptions are omitted here.

Each of the first and second positive electrode active materials may be prepared using corresponding precursors, and the preparation method and precursor materials are not particularly limited.

The lithium manganese-rich first positive electrode active material may undergo formation at a temperature of 40°C to 50°C and at a voltage of 4.6 V to 4.8 V.

Specifically, the lithium manganese-rich first positive electrode active material, which is a manganese-rich positive electrode material, may be subjected to high-voltage formation as follows. To perform initial formation (charging and discharging) of the lithium manganese-rich first positive electrode active material, a separate formation apparatus may be used. Conventional methods in which an electrode plate is first fabricated and then disassembled to recover only the active material are complex and time-consuming. Therefore, to conduct the initial formation of the lithium manganese-rich first positive electrode active material rapidly and efficiently, a flow-cell (flow battery) formation system may be adopted.

In the flow-cell formation method, a first positive electrode active material slurry having a predetermined viscosity may be prepared by mixing the lithium manganese-rich first positive electrode active material powder with a conductive agent and an electrolyte. A cell may then be fabricated including a positive electrode, a negative electrode, and a separator interposed therebetween. The negative electrode may include a graphite electrode coated as a thick film on a copper current collector, and the separator may be a polypropylene separator. The positive electrode may include an aluminum current collector equipped with an inlet and an outlet for the first active material slurry. Using a motor, the slurry may be continuously circulated through the catholyte region in which the aluminum current collector is located, thereby performing high-voltage charging.

After charging is completed, the direction of the applied current may be reversed to carry out discharging. To maximize initial oxygen evolution, the formation may be performed at a temperature of 40°C to 50°C. Charging may be performed at a current rate of 0.1C until a voltage of 4.6 V to 4.8 V, specifically 4.65 V, is reached, followed by applying a constant voltage until the current decreases to a 1/20C condition, ensuring sufficient charge. Thereafter, discharging may be performed while maintaining the same temperature range of 40°C to 50°C and a current rate of 0.1C.

For the initial formation, an electrolyte containing 1M $LiPF_6$ in EC:EMC = 3:7 (vol%) with 3 vol% FEC may be used, and the conductive agent may be carbon black. A reference current of 1C may correspond to 200 mAh/g.

Performing the formation within this voltage range activates the $Li_2MnO_3$ component present in the lithium manganese-rich first positive electrode active material, enabling sufficient participation of oxygen (anion) in the reaction. Furthermore, oxygen generated from side reactions may be effectively removed at an elevated temperature of approximately 45°C during initial formation, thereby suppressing undesirable side reactions during subsequent charge and discharge cycles and improving battery performance.

After completion of formation, the slurry may be recovered, the electrolyte removed, and the material dried, thereby obtaining the formed lithium manganese-rich first positive electrode active material. The first active material may then be mixed with the high-nickel single-particle second positive electrode active material. For homogeneous mixing, mechanical stirring, mixing under an inert gas, or any other conventional mixing method may be used. The method for mixing the two active materials is not particularly limited.

By undergoing high-voltage formation as described above, the manganese-rich lithium manganese-rich first positive electrode active material releases oxygen sufficiently and significantly suppresses gas generation and voltage decay caused by continuous anion redox during cycling, thereby enabling higher capacity.

In the step of mixing the first positive electrode active material and the second positive electrode active material to produce the positive electrode active material, the resulting product may satisfy Relationship 1 below:

$$[\text{Relationship 1}]$$

$$0.77 \le (m/B) \times 10^4 \le 0.95$$

(where $m$ is a tap density (g/cm$^3$) of the positive electrode active material, and $B$ is a specific surface area (m$^2$/g))

The value of Relationship 1 may be from 0.77 to 0.95, specifically 0.82 to 0.95. When the value satisfies this range, a positive electrode active material having improved output characteristics and enhanced cycle performance may be obtained.

**<Positive Electrode and Lithium Secondary Battery>**

According to another embodiment of the present invention, a positive electrode for a lithium secondary battery may include a current collector and a positive electrode active material layer disposed on at least one surface of the current collector, the positive electrode active material layer comprising the positive electrode active material described above.

The current collector may be selected from aluminum, copper foil, nickel foil, stainless steel foil, titanium foil, nickel foam, aluminum foam, copper foam, a polymer substrate coated with a conductive metal, or a combination thereof.

The positive electrode active material layer may further include a binder and a conductive agent. The binder may function to adhere the positive electrode active material particles to one another and to firmly bind the active material layer to the current collector. The conductive agent may be any electron-conductive material that does not cause chemical changes within the battery.

A lithium secondary battery according to an embodiment of the present invention may further include a negative electrode and a non-aqueous electrolyte.

The negative electrode may include a current collector and a negative electrode active material layer formed on the current collector, and the negative electrode active material layer may include a negative electrode active material. The negative electrode active material may include a material capable of reversibly intercalating and de-intercalating lithium ions, lithium metal, a lithium metal alloy, a material capable of doping and de-doping lithium, or a transition metal oxide.

Examples of materials capable of reversibly intercalating and de-intercalating lithium ions include carbon-based materials such as crystalline carbon, amorphous carbon, or combinations thereof. The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

Materials capable of doping and de-doping lithium may include Si, SiOx ($0 \leq x < 2$), Si-Y alloys (where Y is selected from alkali metals, alkaline earth metals, group 13 elements, group 14 elements, transition metals, rare-earth elements, and combinations thereof, except Si), Sn, $SnO_2$, and Sn-Y alloys (where Y is selected from the elements described above, except Sn). The transition metal oxide may include, for example, vanadium oxide or lithium vanadium oxide.

The negative electrode active material layer may further include a binder and optionally a conductive agent. The binder may serve to bind the negative electrode active material particles to each other and to the current collector. The conductive agent may be any electron-conductive material that does not cause chemical changes within the battery.

The current collector for the negative electrode may be selected from aluminum foil, nickel foil, stainless steel foil, titanium foil, nickel foam, aluminum foam, a polymer substrate coated with a conductive metal, or a combination thereof.

The positive electrode and the negative electrode may be manufactured by mixing the active material, conductive agent, and binder in a solvent to prepare an electrode composition and coating the composition onto a current collector. The electrode manufacturing method is not particularly limited. The solvent may be N-methylpyrrolidone or any other suitable solvent.

The electrolyte may be a non-aqueous electrolyte or a solid electrolyte containing a lithium salt. The non-aqueous electrolyte may include an organic solvent serving as a medium that permits ionic movement. Suitable organic solvents may include cyclic carbonates such as ethylene carbonate, propylene carbonate, butylene carbonate, and vinylene carbonate; linear carbonates such as dimethyl carbonate, methyl ethyl carbonate, and diethyl carbonate; esters such as methyl acetate, ethyl acetate, propyl acetate, methyl propionate, ethyl propionate, and $\gamma$-butyrolactone; ethers such as 1,2-dimethoxyethane, 1,2-diethoxyethane, tetrahydrofuran, 1,2-dioxane, and 2-methyltetrahydrofuran; nitriles such as acetonitrile; and amides such as dimethylformamide. These solvents may be used alone or in combination. A mixed solvent of a cyclic carbonate and a linear carbonate may be particularly preferable.

The electrolyte may also be a gel polymer electrolyte, such as one obtained by impregnating a polymer matrix such as polyethylene oxide or polyacrylonitrile with an electrolyte solution, or an inorganic solid electrolyte such as LiI or $Li_3N$.

The lithium salt dissolved in the electrolyte may serve as a lithium-ion source and promote lithium-ion transfer between the positive and negative electrodes. The lithium salt is not particularly limited and may include one or more selected from $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_4$, $LiAlCl_4$, LiCl, and LiI.

A separator may be interposed between the positive electrode and the negative electrode depending on the type of battery. The separator may be a film of polyethylene, polypropylene, polyvinylidene fluoride, or a multilayer film of two or more such layers, including PE/PP bilayer separators, PE/PP/PE trilayer separators, or PP/PE/PP trilayer separators.

The lithium secondary battery may be classified as a lithium-ion battery, a lithium-ion polymer battery, or a lithium polymer battery depending on the separator and electrolyte used. The battery shape may be cylindrical, prismatic, coin-type, or pouch-type, and the size may be bulk-type or thin-film type. The structure and manufacturing method of the battery are not particularly limited in the present invention.

In a lithium secondary battery according to an embodiment of the present invention, an average voltage decay after 50 charge and discharge cycles, relative to an initial charge and discharge, may be from 40 mV to 65 mV, and more specifically from 45 mV to 65 mV.

The lithium secondary battery may satisfy Relationship 2 below.

[Relationship 2]

$$50 \leq \Delta V/(m/B \times 10^4) \leq 80$$

where $\Delta V$ is a voltage decay after 50 charge/discharge cycles relative to an initial charge/discharge, m is a tap density ($g/cm^3$) of the positive electrode active material for the lithium secondary battery, and B is a specific surface area ($m^2/g$) of the positive electrode active material.

Meanwhile, the lithium secondary battery may satisfy Relationship 3 below.

[Relationship 3]

$$3.0 \leq G/(m/B \times 10^4) \leq 5.0$$

where G is a gas generation amount of the lithium secondary battery, m is a tap density ($g/cm^3$) of the positive electrode active material for the lithium secondary battery, and B is a specific surface area ($m^2/g$) of the positive electrode active material.

In the present invention, the gas generation amount was measured as follows. After initially charging a coin cell fabricated using the positive electrode active material according to the Examples and Comparative Examples, the coin cell was disassembled and only the electrode was extracted. The electrode was placed into a pouch together with an electrolyte and sealed. The pouch was then stored at 60°C for four weeks, during which the pouch expanded due to gas generation. The expanded volume was measured using the Archimedes method.

In addition, the lithium secondary battery may satisfy Relationship 4 below.

[Relationship 4]

$$250.0 \leq (G/E_m)/(m/B \times 10^4) \leq 400.0$$

where G is a gas generation amount of the lithium secondary battery, $E_m$ is a loading amount of the positive electrode active material in the positive electrode of the lithium secondary battery, m is a tap density ($g/cm^3$) of the positive electrode active material, and B is a specific surface area ($m^2/g$) of the positive electrode active material.

$E_m$ is calculated by considering both the positive electrode loading amount and the content of the positive electrode active material in the positive electrode.

[Best Mode for Carrying Out the Invention]

Hereinafter, exemplary embodiments of the present invention will be described in detail. However, the embodiments are presented merely by way of example, and the present invention is not limited thereto and is defined only by the scope of the claims described later.

**(Preparation Example 1: Preparation of Lithium Manganese-Rich First Positive Electrode Active Material)**

A nickel-cobalt-manganese coprecipitated hydroxide was prepared using a 20-L coprecipitation reactor. A metal salt solution for precursor synthesis was prepared by dissolving $NiSO_4 \cdot 6H_2O$, $CoSO_4 \cdot 7H_2O$, and $MnSO_4 \cdot H_2O$ in DI water to obtain a 2.5 M aqueous metal salt solution. To prevent oxidation of metal ions during coprecipitation, $N_2$ gas was purged into the solution, and the reactor temperature was maintained at 50°C. The metal salt solution and a coprecipitation chelating agent $NH_4OH$ were fed into the coprecipitation reactor, and NaOH was used for pH control. The precursor was grown to have an average particle size (D50) of 10 $\mu$m, and the obtained precursor was filtered, washed with DI water, and vacuum-dried in a 100°C oven for 24 hours.

The prepared first positive electrode active material precursor and a lithium raw material, $LiOH \cdot H_2O$, were weighed according to the designed composition of the first positive electrode active material and mixed using a mixer. The resulting mixture was charged into a refractory saggar and placed in a box furnace. While supplying 180 LPH of air into the furnace, the mixture was heated to 850°C over 5 hours, calcined at 850°C for 10 hours, and cooled to room temperature over 5 hours. The calcined material was pulverized using a mortar and pestle and sieved through a 325-mesh screen to obtain the lithium manganese-rich first positive electrode active material. The composition and average particle size (D50) of the prepared lithium manganese-rich first positive electrode active material are shown in Table 1.

To prepare a first positive electrode active material slurry, the lithium manganese-rich first positive electrode active material powder, a conductive agent, and an electrolyte were mixed to form a slurry having a predetermined viscosity. A cell including a positive electrode, a negative electrode, and a separator disposed therebetween was then fabricated. The negative electrode was lithium metal or a copper current collector coated with a thick graphite electrode layer, and the separator was a polypropylene separator. The positive electrode included an aluminum current collector having an inlet for injecting the active material slurry and an outlet for discharging the slurry. The first positive electrode active material slurry was circulated continuously through the catholyte region where the aluminum current collector was located, using a motor, thereby carrying out high-voltage charging. After charging, the direction of the applied current was reversed to perform discharging.

To maximize the amount of oxygen released at the initial stage, formation was performed at 45°C. During charging, a voltage of up to 4.65 V was applied at a current rate of 0.1C, and thereafter a constant voltage was applied until the current decreased to a 1/20C condition to ensure sufficient activation. Discharging was then performed by reversing the current direction under the same temperature range of 40°C to 50°C and at a current rate of 0.1C. The electrolyte used for the initial formation was a solution containing 1 M $LiPF_6$ in EC:EMC = 3:7 (vol%) with 3 vol% FEC added. The conductive agent was carbon black, and the 1C reference current corresponded to 200 mAh/g.

Table 1 below shows the compositions, initial formation discharge capacities, and tap densities of the lithium manganese-rich first positive electrode active materials of different particle sizes.

[Table 1]

| Composition | Particle size (D50, $\mu$m) | Initial discharge capacity (4.65V-2V, mAh/g, 0.1C, 45°C) | tap density (g/cm$^3$) |
|---|---|---|---|
| $Li_{1.13}Ni_{0.3}Mn_{0.57}O_2$ | 8 | 277 | 1.71 |
| $Li_{1.13}Ni_{0.3}Mn_{0.57}O_2$ | 10 | 275 | 1.83 |
| $Li_{1.13}Ni_{0.3}Mn_{0.57}O_2$ | 14 | 271 | 2.03 |
| $Li_{1.13}Ni_{0.3}Mn_{0.57}O_2$ | 5 | 279 | 1.50 |
| $Li_{1.13}Ni_{0.3}Mn_{0.57}O_2$ | 3 | 281 | 1.29 |
| $Li_{1.1}Ni_{0.28}Co_{0.1}Mn_{0.52}O_2$ | 10 | 280 | 1.92 |
| $Li_{1.1}Ni_{0.28}Co_{0.1}Mn_{0.52}O_2$ | 3 | 285 | 1.32 |

Referring to Table 1, it is confirmed that the initial discharge capacity increases when cobalt is present, and although the discharge capacity decreases as the average particle size increases, the tap density increases accordingly. After performing initial discharge as described above, the first positive electrode active material slurry was recovered, the electrolyte was removed, and the resulting powder was dried to finally obtain the first positive electrode active material having a large particle size.

**(Preparation Example 2: Preparation of High-Nickel Single-Particle Second Positive Electrode Active Material)**

A precursor of the high-nickel single-particle second positive electrode active material was prepared in the same manner as the precursor of the lithium manganese-rich first positive electrode active material. The prepared second positive electrode active material precursor, lithium raw material LiOH·H$_2$O, and an Al(OH)$_3$ precursor were weighed according to the designed composition of the high-nickel single-particle second positive electrode active material, and mixed using a mixer to prepare a homogeneous mixture. The mixture was charged into a refractory saggar and placed in a box furnace. Oxygen gas (200 LPH) was introduced into the furnace, and the temperature was increased to 750°C to 850°C over 5 hours, maintained for 10 hours, and then cooled to room temperature over 5 hours. The calcined material was then further heat-treated at 850°C under rapid-heating conditions for 5 hours. The obtained calcined material was pulverized and sieved through a 325-mesh screen to prepare a high-nickel single-particle second positive electrode active material having a small particle size. The composition and average particle size (D50) of the prepared second positive electrode active material are shown in Table 2.

**(Preparation of Positive Electrode Active Material for a Lithium Secondary Battery)**

The high-nickel single-particle second positive electrode active material having a small particle size, prepared according to Preparation Example 2, and the lithium manganese-rich first positive electrode active material having a large particle size, prepared according to Preparation Example 1, were uniformly mixed according to the designed ratios to prepare the positive electrode active material for a lithium secondary battery. Table 2 shows the composition and mixing ratios of the formation-treated large-particle lithium manganese-rich first positive electrode active material and the small-particle high-nickel single-particle second positive electrode active material included in the positive electrode active materials of the Examples and Comparative Examples. In Comparative Example 1, a small-particle lithium manganese-rich active material was used instead of the small-particle second positive electrode active material.

[Table 2]

| Sample | Large-particle first positive electrode active material | | Small-particle second positive electrode active material | | Mixing weight ratio (large:small) |
|---|---|---|---|---|---|
| | Chemical Formula | Average particle size (D50, μm) | Chemical Formula | Average particle size (D50, μm) | |
| Ex. 1 | $Li_{1.13}Ni_{0.3}Mn_{0.57}O_2$ | 10 | $LiNi_{0.94}Co_{0.04}Mn_{0.01}Al_{0.01}O_2$ | 3 | 80:20 |
| Ex. 2 | $Li_{1.13}Ni_{0.3}Mn_{0.57}O_2$ | 10 | $LiNi_{0.91}Co_{0.06}Mn_{0.02}Al_{0.01}O_2$ | 3 | 80:20 |
| Ex. 3 | $Li_{1.13}Ni_{0.3}Mn_{0.57}O_2$ | 10 | $LiNi_{0.86}Co_{0.09}Mn_{0.03}Al_{0.02}O_2$ | 3 | 80:20 |
| Ex. 4 | $Li_{1.13}Ni_{0.3}Mn_{0.57}O_2$ | 10 | $LiNi_{0.83}Co_{0.12}Mn_{0.03}Al_{0.02}O_2$ | 3 | 80:20 |
| Ex. 5 | $Li_{1.13}Ni_{0.3}Mn_{0.57}O_2$ | 14 | $LiNi_{0.94}Co_{0.04}Mn_{0.01}Al_{0.01}O_2$ | 5 | 80:20 |
| Ex. 6 | $Li_{1.13}Ni_{0.3}Mn_{0.57}O_2$ | 10 | $LiNi_{0.86}Co_{0.09}Mn_{0.03}Al_{0.02}O_2$ | 3 | 70:30 |
| Ex. 7 | $Li_{1.1}Ni_{0.28}Co_{0.1}Mn_{0.52}O_2$ | 10 | $LiNi_{0.86}Co_{0.09}Mn_{0.03}Al_{0.02}O_2$ | 3 | 80:20 |
| Ex. 8 | $Li_{1.13}Ni_{0.3}Mn_{0.57}O_2$ | 8 | $LiNi_{0.86}Co_{0.09}Mn_{0.03}Al_{0.02}O_2$ | 3 | 80:20 |
| Ex. 9 | $Li_{1.13}Ni_{0.3}Mn_{0.57}O_2$ | 10 | $LiNi_{0.94}Co_{0.04}Mn_{0.01}Al_{0.01}O_2$ | 3 | 60:40 |
| C-Ex. 1 | $Li_{1.13}Ni_{0.3}Mn_{0.57}O_2$ | 10 | $Li_{1.13}Ni_{0.3}Mn_{0.57}O_2$ | 3 | 80:20 |
| C-Ex. 2 | $Li_{1.1}Ni_{0.28}Co_{0.1}Mn_{0.52}O_2$ | 10 | $Li_{1.1}Ni_{0.28}Co_{0.1}Mn_{0.52}O_2$ | 3 | 80:20 |
| C-Ex. 3 | $Li_{1.13}Ni_{0.3}Mn_{0.57}O_2$ | 6 | $LiNi_{0.94}Co_{0.04}Mn_{0.01}Al_{0.01}O_2$ | 3 | 80:20 |
| C-Ex. 4 | $Li_{1.13}Ni_{0.3}Mn_{0.57}O_2$ | 10 | $LiNi_{0.94}Co_{0.04}Mn_{0.01}Al_{0.01}O_2$ | 2 | 80:20 |
| C-Ex. 5 | $Li_{1.13}Ni_{0.3}Mn_{0.57}O_2$ | 10 | $LiNi_{0.94}Co_{0.04}Mn_{0.01}Al_{0.01}O_2$ | 3 | 50:50 |
| C-Ex. 6 | $Li_{1.13}Ni_{0.3}Mn_{0.57}O_2$ | 10 | $LiNi_{0.94}Co_{0.04}Mn_{0.01}Al_{0.01}O_2$ | 3 | 90:10 |
| C-Ex. 7 | $Li_{1.14}Ni_{0.43}Mn_{0.43}O_2$ | 10 | $LiNi_{0.94}Co_{0.04}Mn_{0.01}Al_{0.01}O_2$ | 3 | 80:20 |
| C-Ex. 8 | Un-formation $Li_{1.13}Ni_{0.3}Mn_{0.57}O_2$ | 10 | $LiNi_{0.94}Co_{0.04}Mn_{0.01}Al_{0.01}O_2$ | 3 | 80:20 |

**(Characteristics Analysis 1 - SEM Analysis)**

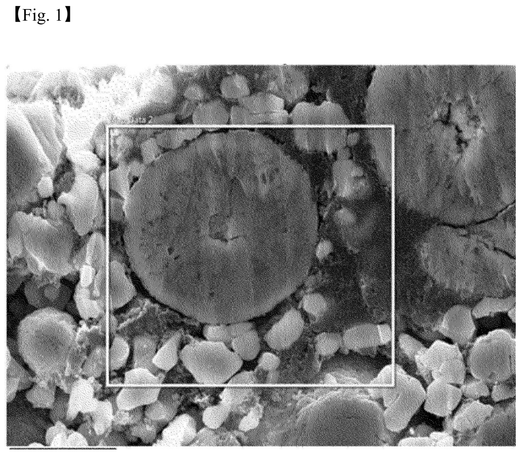

Cross-sectional SEM images of an electrode prepared using the positive electrode active material manufactured in Example 1 were obtained, and the results are shown in Fig. 1. Referring to Fig. 1, it can be confirmed that the large-particle first positive electrode active material and the small-particle single-crystal second positive electrode active material are uniformly dispersed throughout the electrode cross-section.

In particular, the spherical large particles correspond to the lithium manganese-rich first positive electrode active material, whereas the randomly distributed small particles surrounding the large particles correspond to the small-particle high-nickel single-particle second positive electrode active material.

**(Characteristics Analysis 2 - EDS Analysis)**

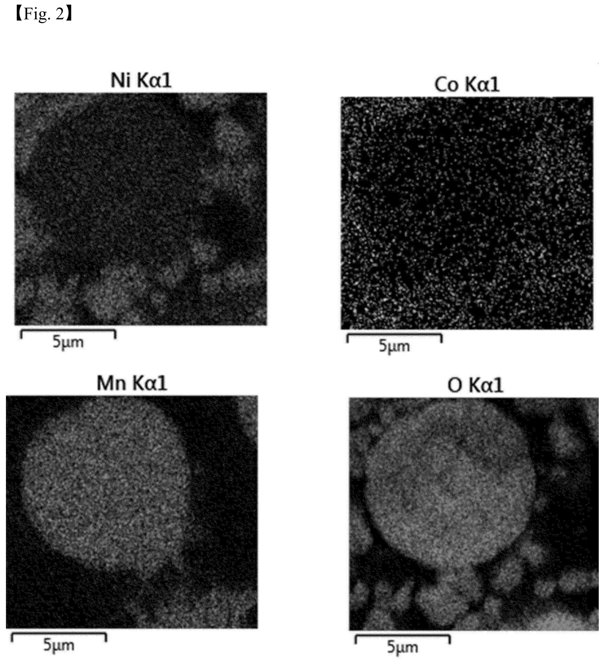

Fig. 2 illustrates elemental mapping results obtained by EDS (Energy-dispersive X-ray spectroscopy) for the region indicated by the rectangular box in Fig. 1 for the positive electrode active material according to Example 1.

Referring to Fig. 2, Ni is predominantly distributed in the small-particle regions, corresponding to the high-nickel single-particle second positive electrode active material, while Mn is relatively concentrated in the large-particle regions, corresponding to the lithium manganese-rich first positive electrode active material.

Table 3 below presents the tap density and specific surface area (BET) of the positive electrode active materials prepared according to the Examples and Comparative Examples, along with calculated values representing the correlation between tap density (m) and specific surface area (B).

[Table 3]

| | Tap Density (m) (g/cm³) | BET (B) (m²/g) | Relationship 1 m/B × 10⁴ (g²/cm⁵) |
|---|---|---|---|
| Ex. 1 | 2.03 | 2.45 | 0.83 |

(continued)

|  | Tap Density (m) (g/cm$^3$) | BET (B) (m$^2$/g) | Relationship 1 m/B $\times$ 10$^4$ (g$^2$/cm$^5$) |
|---|---|---|---|
| Ex.2 | 2.01 | 2.56 | 0.79 |
| Ex.3 | 2.02 | 2.48 | 0.81 |
| Ex.4 | 2.02 | 2.56 | 0.79 |
| Ex.5 | 2.15 | 2.51 | 0.86 |
| Ex.6 | 2.03 | 2.21 | 0.92 |
| Ex.7 | 2.03 | 2.48 | 0.82 |
| Ex.8 | 1.91 | 2.46 | 0.78 |
| Ex.9 | 1.92 | 2.13 | 0.90 |
| C-Ex.1 | 1.82 | 3.58 | 0.51 |
| C-Ex.2 | 1.93 | 3.64 | 0.53 |
| C-Ex.3 | 1.77 | 2.55 | 0.69 |
| C-Ex.4 | 1.92 | 2.54 | 0.76 |
| C-Ex.5 | 1.82 | 2.47 | 0.74 |
| C-Ex.6 | 1.88 | 3.04 | 0.62 |
| C-Ex.7 | 2.07 | 2.54 | 0.81 |
| C-Ex.8 | 1.97 | 2.44 | 0.81 |

**(Manufacture of Coin-Type Half Cells)**

Coin-type CR2032 half cells were fabricated using the positive electrode active materials prepared in the Examples and Comparative Examples, and electrochemical evaluations were conducted thereafter. A slurry for electrode fabrication was prepared by mixing the positive electrode active material, a conductive agent (Denka Black), and a binder (PVDF, KF1100) at a weight ratio of 92.5:3.5:4. N-Methyl-2-pyrrolidone (NMP) was added so that the solid content became approximately 30 wt%, thereby adjusting the slurry viscosity. The prepared slurry was coated on a 15-$\mu$m-thick aluminum foil using a doctor blade, dried, and subsequently calendered. The electrode loading amount was approximately 14 mg/cm$^2$. As the electrolyte, a solution of 1M LiPF$_6$ in EC:EMC = 3:7 (vol%) containing 3 vol% FEC was used, and a polypropylene (PP) separator and a lithium metal anode (200 $\mu$m, Honzo Metal) were employed. After cell assembly, the coin cells were aged at room temperature for 10 hours, followed by subsequent charge/discharge testing.

The charge and discharge tests were conducted under conditions of charging to 4.4 V and discharging to 2.5 V, and the results of the electrochemical evaluations are shown in Table 4 below. In Table 4, the loading amount of the positive electrode active material (E$_m$) was calculated to be 12.95 mg/cm$^2$, considering the electrode loading of 14 mg/cm$^2$ and the weight fraction of the positive electrode active material (92.5 wt%) in the electrode formulation comprising the positive electrode active material, Denka Black, and PVDF (KF1100).

[Table 4]

| | Discharge capacity (4.4V~2.5V, mAh/g, 0.1C, 25°C | 0.33C Discharge capacity (mAh/g, 25°C | Cycle life (50, 0.33C, 25°C | Voltage decay ($\triangle$V) (mV, 50) | Gas Generation amount (G) (cc) | [Relationship2] ($\triangle$ V/(m/B*10^4)) (mV/(g$^2$/cm$^5$ )) | [Relationship3] (G/(m/B*10^4)) (cc/(g*/cm$^5$ )) | [Relationship4] (G/Em)/(m/B*10^4) (cm$^{10}$/g$^3$ )) |
|---|---|---|---|---|---|---|---|---|
| Example 1 | 222 | 205 | 95.4 | 64 | 4.00 | 77.24 | 4.83 | 372.8 |
| Example 2 | 219 | 203 | 95.9 | 62 | 3.85 | 78.97 | 4.90 | 378.6 |
| Example 3 | 216 | 201 | 96.4 | 58 | 3.70 | 71.21 | 4.54 | 350.8 |
| Example 4 | 212 | 198 | 97.7 | 50 | 3.50 | 63.37 | 4.44 | 342.5 |
| Example 5 | 219 | 199 | 95.6 | 58 | 3.90 | 67.71 | 4.55 | 351.6 |
| Example 6 | 214 | 199 | 97.1 | 46 | 3.25 | 50.08 | 3.54 | 273.2 |
| Example 7 | 219 | 202 | 96.8 | 56 | 3.65 | 68.41 | 4.46 | 344.3 |
| Example 8 | 217 | 202 | 96.6 | 59 | 3.75 | 75.99 | 4.83 | 373.0 |
| Example 9 | 212 | 199 | 96.8 | 52 | 3.30 | 57.69 | 3.66 | 282.7 |
| Comparative Example 1 | 218 | 197 | 92.1 | 130 | 5.00 | 255.71 | 9.84 | 759.5 |
| Comparative Example 2 | 221 | 199 | 93.7 | 126 | 4.85 | 237.64 | 9.15 | 706.3 |
| Comparative Example 3 | 222 | 207 | 93.5 | 74 | 4.50 | 106.61 | 6.48 | 500.6 |
| Comparative Example 4 | 223 | 206 | 95.1 | 70 | 4.55 | 92.60 | 6.02 | 464.8 |
| Comparative Example 5 | 210 | 197 | 94.4 | 70 | 3.75 | 95.00 | 5.09 | 393.0 |
| Comparative Example 6 | 224 | 207 | 93.4 | 77 | 4.60 | 124.51 | 7.44 | 574.4 |
| Comparative Example 7 | 213 | 197 | 94.1 | 73 | 4.25 | 89.57 | 5.21 | 402.7 |
| Comparative Example 8 | 221 | 205 | 74.1 | 77 | 16.00 | 81.75 | 19.82 | 1530.3 |

Referring to Table 4, it was confirmed that the cells employing the positive electrode active materials of Examples 1 to 9 exhibited a capacity retention of 95% or greater at the 50th cycle relative to the first cycle. The average discharge voltage after charge/discharge cycling was determined by quantifying the reduction in voltage after cycling. In particular, in the present invention, when the coin half-cell was charged and discharged once in a voltage range of 4.4 V to 2.5 V, the discharge curve was integrated, and the voltage corresponding to 50% of the total discharged energy was defined as the "initial voltage." Subsequently, charge/discharge cycling was continued up to the 50th cycle, and the discharge curve at the 50th cycle was similarly integrated to determine the voltage corresponding to 50% of the total discharged energy, which was defined as the "final voltage."

The difference between the final voltage and the initial voltage was defined as the voltage decay. Referring again to Table 4, the coin cells manufactured using the positive electrode active materials of Examples 1 to 9 exhibited a voltage decay of 70 mV or less, specifically from 40 mV to 65 mV, and more specifically from 45 mV to 65 mV, after 50 charge/discharge cycles, whereas the coin cells employing the positive electrode active materials of Comparative Examples 1 to 8 exhibited a voltage decay of 70 mV or greater, indicating significantly larger voltage decay.

In addition, for the coin cells of Examples 1 to 9, the value of Relationship 2, $\Delta V/(m/B \times 10^4)$, was 50 or greater and simultaneously 80 or less, while for Comparative Examples 1 to 8, the value exceeded 80.

Moreover, the gas generation amounts of the cells employing the positive electrode active materials prepared according to the Examples and Comparative Examples were measured as shown in Table 4.

As can be seen from Table 4, for Examples 1 to 9, the value of Relationship 3, $G/(m/B \times 10^4)$, was within the range of 3.0 to 5.0, specifically from 3.5 to 4.9, whereas for Comparative Examples 1 to 8, the value exceeded 5.0. Further, the value of Relationship 4, $(G/E_m)/(m/B \times 10^4)$, representing the gas generation normalized by the loading amount of the positive electrode active material, was within the range of 250.0 to 400.0, specifically from 270.0 to 380.0, for Examples 1 to 9, whereas for Comparative Examples 1 to 8, the value exceeded 400.

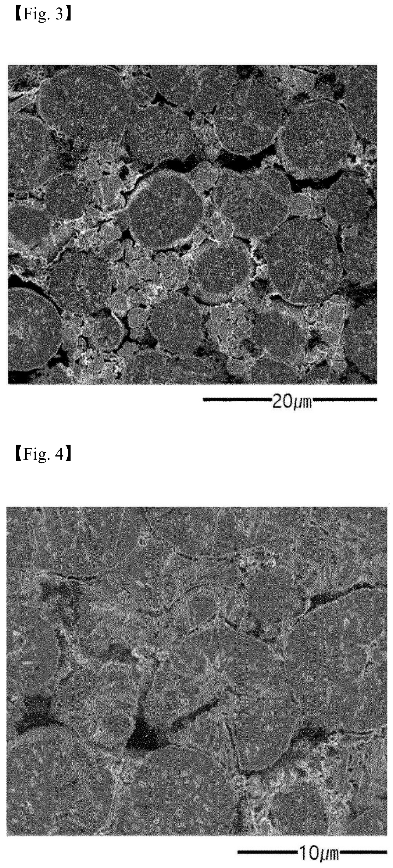

FIG. 3 illustrates a cross-sectional SEM image of the positive electrode plate after 100 charge/discharge cycles for the coin cell employing the positive electrode active material of Example 1, and FIG. 4 illustrates a corresponding SEM image for the coin cell employing the positive electrode active material of Comparative Example 1.

Referring to FIG. 3, when the small-particle second positive electrode active material was the high-nickel single-particle material of Example 1, the extent of cracking in the large-particle first positive electrode active material after 100 charge/discharge cycles was markedly reduced compared with the case of Comparative Example 1, where the small-particle material was a manganese-rich secondary particle.

As further shown in FIG. 3, in the case of Example 1, essentially no cracking occurred in the positive electrode active material after 100 cycles. By contrast, FIG. 4 shows that for Comparative Example 1, cracking occurred not only in the large-particle first positive electrode active material but also in the small-particle second positive electrode active material after 100 cycles. Such cracking continuously increases the specific surface area of the positive electrode active material during charge/discharge cycling, thereby accelerating unwanted reactions with the electrolyte, leading to increased gas generation and accelerated performance degradation.

The present invention is not limited to the foregoing Examples and may be embodied in various other forms. Those skilled in the art will understand that various modifications and alterations may be made without departing from the spirit or essential features of the invention as defined by the appended claims. Accordingly, the Examples described above are merely illustrative and should not be construed as limiting.

**Claims**

1. A positive electrode active material for a lithium secondary battery, comprising:

   a lithium manganese-rich first positive electrode active material represented by Chemical Formula 1 below; and a high-nickel single-particle second positive electrode active material represented by Chemical Formula 2 below, wherein an average particle size ($D50_1$) of the lithium manganese-rich first positive electrode active material is greater than an average particle size ($D50_2$) of the high-nickel single-particle second positive electrode active material.

   [Chemical Formula 1]  $Li_{1+x1}(Ni_{(1-a1-b1)}Co_{a1}Mn_{b1})O_2$

   (where $-0.5 \leq x_1 \leq 0.5$, $0 \leq a_1 \leq 0.5$, and $0.5 \leq b_1 \leq 1$.)

   [Chemical Formula 2]  $Li_{1+x2}(Ni_{(1-a2-b2-c2)}Co_{a2}Mn_{b2}M_{c2})O_2$

   (where $-0.5 \leq x_2 \leq 0.5$, $0 \leq a_2 \leq 0.2$, $0 \leq b_2 \leq 0.1$, $0 \leq c_2 \leq 0.03$, and M is at least one element selected from Fe, Cr, Ti, Zn, V, Al, Mg, and Zr.)

2. The positive electrode active material of claim 1, wherein a ratio $D50_1/D50_2$ - the average particle size ($D50_1$) of the lithium manganese-rich first positive electrode active material to the average particle size ($D50_2$) of the high-nickel single-particle second positive electrode active material - is from 2.5 to 4.5.

3. The positive electrode active material of claim 1, wherein the average particle size ($D50_1$) of the lithium manganese-rich first positive electrode active material is from 7 μm to 15 μm.

4. The positive electrode active material of claim 1, wherein the average particle size ($D50_2$) of the high-nickel single-particle second positive electrode active material is from 3 μm to 6 μm.

5. The positive electrode active material of claim 1, wherein the lithium manganese-rich first positive electrode active material is a secondary particle composed of a plurality of primary particles.

6. The positive electrode active material of claim 1, wherein a weight ratio ($w_1/w_2$) of the lithium manganese-rich first positive electrode active material ($w_1$) to the high-nickel single-particle second positive electrode active material ($w_2$) is from 85:15 to 55:45.

7. The positive electrode active material of claim 1, wherein a ratio ($C_{Mn1}/C_{Mn2}$) of a manganese molar content ($C_{Mn1}$), based on total metals excluding lithium, in the lithium manganese-rich first positive electrode active material to a manganese molar content ($C_{Mn2}$), based on total metals excluding lithium, in the high-nickel single-particle second positive electrode active material is from 15.0 to 70.0.

8. The positive electrode active material of claim 1, wherein a difference ($C_{Mn1} - C_{Mn2}$) between the manganese molar content ($C_{Mn1}$), based on total metals excluding lithium, in the lithium manganese-rich first positive electrode active material and the manganese molar content ($C_{Mn2}$), based on total metals excluding lithium, in the high-nickel single-particle second positive electrode active material is from 50 mol% to 70 mol%.

9. The positive electrode active material of claim 1, wherein a ratio ($C_{Ni2}/C_{Ni1}$) of a nickel molar content ($C_{Ni2}$), based on total metals excluding lithium, in the high-nickel single-particle second positive electrode active material to a nickel molar content ($C_{Ni1}$), based on total metals excluding lithium, in the lithium manganese-rich first positive electrode active material is from 2.0 to 3.0.

10. The positive electrode active material of claim 1, wherein a difference ($C_{Ni2} - C_{Ni1}$) between the nickel molar content ($C_{Ni2}$), based on total metals excluding lithium, in the high-nickel single-particle second positive electrode active material and the nickel molar content ($C_{Ni1}$), based on total metals excluding lithium, in the lithium manganese-rich first positive electrode active material is from 45 mol% to 65 mol%.

11. The positive electrode active material of claim 1, wherein the lithium manganese-rich first positive electrode active material has undergone formation at a voltage of 4.6 V to 4.8 V.

12. The positive electrode active material of claim 1, wherein the tap density of the positive electrode active material is from 1.90 g/cm$^3$ to 2.20 g/cm$^3$.

13. The positive electrode active material of claim 1, wherein the specific surface area of the positive electrode active material is from 2.0 cm$^2$/g to 3.0 cm$^2$/g.

14. The positive electrode active material of claim 1, wherein the positive electrode active material satisfies Relationship 1 below.

[Relationship 1]

$$0.77 \leq (m/B) \times 10^4 \leq 0.95$$

(where m is the tap density (g/cm$^3$) of the positive electrode active material, and B is the specific surface area (m$^2$/g) of the positive electrode active material.)

15. The positive electrode active material of claim 1, wherein a nickel molar content, based on total metals excluding lithium, in the second positive electrode active material is 80 mol% or greater.

16. The positive electrode active material of claim 1, wherein a manganese molar content, based on total metals excluding lithium, in the first positive electrode active material is 50 mol% or greater.

17. A method for manufacturing a positive electrode active material for a lithium secondary battery, comprising:

preparing a lithium manganese-rich first positive electrode active material represented by Chemical Formula 1;
preparing a high-nickel single-particle second positive electrode active material represented by Chemical Formula 2; and
mixing the first and second positive electrode active materials to produce a positive electrode active material,
wherein an average particle size ($D50_1$) of the lithium manganese-rich first positive electrode active material is greater than an average particle size ($D50_2$) of the high-nickel single-particle second positive electrode active material.

[Chemical Formula 1] $Li_{1+x1}(Ni_{(1-a1-b1)}Co_{a1}Mn_{b1})O_2$

(where $-0.5 \leq x_1 \leq 0.5$, $0 \leq a_1 \leq 0.5$, and $0.5 \leq b_1 \leq 1$.)

[Chemical Formula 2] $Li_{1+x2}(Ni_{(1-a2-b2-c2)}Co_{a2}Mn_{b2}M_{c2})O_2$

(where $-0.5 \leq x_2 \leq 0.5$, $0 \leq a_2 \leq 0.2$, $0 \leq b_2 \leq 0.1$, $0 \leq c_2 \leq 0.03$, and M is at least one element selected from Fe, Cr, Ti, Zn, V, Al, Mg, and Zr.)

18. The method of claim 17, wherein the step of preparing the lithium manganese-rich first positive electrode active material comprises forming the lithium manganese-rich first positive electrode active material at a voltage of 4.6 V to 4.8 V.

19. The method of claim 17, wherein the step of forming the lithium manganese-rich first positive electrode active material at a voltage of 4.6 V to 4.8 V is performed at a temperature of 40°C to 50°C.

20. The method of claim 17, wherein the step of forming the lithium manganese-rich first positive electrode active material at a voltage of 4.6 V to 4.8 V comprises:

charging the lithium manganese-rich first positive electrode active material at a current rate of 0.1C to a voltage of 4.6 V to 4.8 V; and
applying a constant voltage until the current decreases to a 1/20C condition.

21. The method of claim 17, wherein the step of forming the lithium manganese-rich first positive electrode active material at a voltage of 4.6 V to 4.8 V comprises discharging at a current rate of 0.1C.

22. The method of claim 17, wherein preparing the lithium manganese-rich first positive electrode active material comprises preparing the lithium manganese-rich first positive electrode active material having an average particle size ($D50_1$) in a range of 7 $\mu$m to 15 $\mu$m.

23. The method of claim 17, wherein preparing the high-nickel single-particle second positive electrode active material comprises preparing the high-nickel single-particle second positive electrode active material having an average particle size ($D50_2$) in a range of 3 $\mu$m to 6 $\mu$m.

24. The method of claim 17, wherein the step of mixing the first positive electrode active material and the second positive electrode active material to produce a positive electrode active material comprises mixing the materials at a weight ratio ($w_1/w_2$) of the lithium manganese-rich first positive electrode active material ($w_1$) to the high-nickel single-particle second positive electrode active material ($w_2$) of 85:15 to 55:45.

25. The method of claim 17, wherein the step of mixing the first positive electrode active material and the second positive electrode active material to produce the positive electrode active material comprises producing a positive electrode active material satisfying Relationship 1 below.

[Relationship 1]

$$0.77 \le (m/B) \times 10^4 \le 0.95$$

(where m is the tap density (g/cm$^3$) of the positive electrode active material, and B is the specific surface area (m$^2$/g) of the positive electrode active material.)

26. A positive electrode for a lithium secondary battery, comprising:

   a current collector; and
   a positive electrode active material layer disposed on at least one surface of the current collector and comprising the positive electrode active material according to any one of claims 1 to 16.

27. A lithium secondary battery comprising the positive electrode of claim 26.

28. The lithium secondary battery of claim 27, wherein an average voltage decay after 50 charge and discharge cycles is from 40 mV to 65 mV.

29. The lithium secondary battery of claim 27, wherein the battery satisfies Relationship 2 below.

[Relationship 2]

$$50 \le \Delta V/(m/B \times 10^4) \le 80$$

(where $\Delta V$ is a voltage decay after 50 charge/discharge cycles relative to an initial charge/discharge, m is a tap density (g/cm$^3$) of the positive electrode active material, and B is a specific surface area (m$^2$/g) of the positive electrode active material.)

30. The lithium secondary battery of claim 27, wherein the battery satisfies Relationship 3 below.

[Relationship 3]

$$3.0 \le G/(m/B \times 10^4) \le 5.0$$

(where G is a gas generation amount of the lithium secondary battery, m is the tap density (g/cm$^3$) of the positive electrode active material, and B is the specific surface area (m$^2$/g) of the positive electrode active material.)

31. The lithium secondary battery of claim 27, wherein the battery satisfies Relationship 4 below.

[Relationship 4]

$$250.0 \le (G/E_m)/(m/B \times 10^4) \le 400.0$$

(where G is a gas generation amount of the lithium secondary battery, $E_m$ is a loading amount of the positive electrode active material in the positive electrode, m is the tap density (g/cm$^3$) of the positive electrode active material, and B is the specific surface area (m$^2$/g) of the positive electrode active material.)

【Fig. 1】

【Fig. 2】

Ni Kα1

Co Kα1

Mn Kα1

O Kα1

【Fig. 3】

20μm

【Fig. 4】

10μm

## INTERNATIONAL SEARCH REPORT

| International application No. |
|---|
| **PCT/KR2024/001830** |

| | |
|---|---|
| **A.** | **CLASSIFICATION OF SUBJECT MATTER** |

**H01M 4/36**(2006.01)i; **H01M 4/505**(2010.01)i; **H01M 4/525**(2010.01)i; **C01G 53/00**(2006.01)i; **H01M 4/131**(2010.01)i; **H01M 10/052**(2010.01)i; **H01M 4/02**(2006.01)i

According to International Patent Classification (IPC) or to both national classification and IPC

| | |
|---|---|
| **B.** | **FIELDS SEARCHED** |

Minimum documentation searched (classification system followed by classification symbols)

H01M 4/36(2006.01); H01M 10/052(2010.01); H01M 10/42(2006.01); H01M 4/131(2010.01); H01M 4/485(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 활물질(active material), 리튬망간리치(lithium manganese rich), 하이니켈(high nickel), 단입자(single particle), 입자크기(particle size), 바이모달(bimodal)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | KR 10-2020-0070649 A (LG CHEM, LTD.) 18 June 2020 (2020-06-18)<br>See claims 1, 3-8, 10 and 12-13; and paragraphs [0114]-[0116]. | 1-31 |
| A | KR 10-2017-0063387 A (LG CHEM, LTD.) 08 June 2017 (2017-06-08)<br>See entire document. | 1-31 |
| A | KR 10-2014-0098433 A (LG CHEM, LTD.) 08 August 2014 (2014-08-08)<br>See entire document. | 1-31 |
| A | KR 10-2023-0065076 A (KOREA AUTOMOTIVE TECHNOLOGY INSTITUTE) 11 May 2023 (2023-05-11)<br>See entire document. | 1-31 |
| A | KR 10-2020-0065625 A (LG CHEM, LTD.) 09 June 2020 (2020-06-09)<br>See entire document. | 1-31 |

☐ Further documents are listed in the continuation of Box C.  ☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 May 2024** | **10 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/001830**

| Patent document cited in search report | | | Publication date (day/month/year) | Patent family member(s) | | | Publication date (day/month/year) |
|---|---|---|---|---|---|---|---|
| KR | 10-2020-0070649 | A | 18 June 2020 | KR | 10-2543571 | B1 | 15 June 2023 |
| | | | | US | 2020-0185714 | A1 | 11 June 2020 |
| KR | 10-2017-0063387 | A | 08 June 2017 | | None | | |
| KR | 10-2014-0098433 | A | 08 August 2014 | KR | 10-1593005 | B1 | 11 February 2016 |
| KR | 10-2023-0065076 | A | 11 May 2023 | | None | | |
| KR | 10-2020-0065625 | A | 09 June 2020 | | None | | |

Form PCT/ISA/210 (patent family annex) (July 2022)